(19) Europäisches Patentamt
European Patent Office
Office européen des brevets

(11) **EP 3 794 376 B1**

(12) **EUROPEAN PATENT SPECIFICATION**

(45) Date of publication and mention
of the grant of the patent:
**10.08.2022 Bulletin 2022/32**

(21) Application number: **19732140.9**

(22) Date of filing: **15.05.2019**

(51) International Patent Classification (IPC):
**G01S 17/89** (2020.01)     **G06N 3/04** (2006.01)
**G06K 9/62** (2022.01)     **G01S 13/89** (2006.01)

(52) Cooperative Patent Classification (CPC):
**G01S 17/89; G01S 13/89; G06K 9/00536;
G06K 9/6268; G06N 3/0454; G06N 3/0481;
G06N 3/08; G06V 10/82;** G06N 5/003; G06N 7/005;
G06N 20/10

(86) International application number:
**PCT/IT2019/050101**

(87) International publication number:
**WO 2019/220474 (21.11.2019 Gazette 2019/47)**

(54) **APPARATUS AND METHOD TO CLASSIFY FULL WAVEFORM DATA FROM RETRO-FLECTED SIGNALS**

VORRICHTUNG UND VERFAHREN ZUM KLASSIFIZIEREN VOLLSTÄNDIGER WELLENFORMDATEN AUS RÜCKGESTRAHLTEN SIGNALEN

APPAREIL ET PROCÉDÉ DE CLASSIFICATION DE DONNÉES SOUS FORME D'ONDE COMPLÈTE À PARTIR DE SIGNAUX DE RETOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2018 IT 201800005375**

(43) Date of publication of application:
**24.03.2021 Bulletin 2021/12**

(73) Proprietor: **Universita' Degli Studi di Udine
33100 Udine (IT)**

(72) Inventors:
• **CROSILLA, Fabio
34134 Trieste (IT)**
• **FUSIELLO, Andrea
33100 Udine (IT)**
• **MASET, Eleonora
31015 Conegliano (IT)**
• **ZORZI, Stefano
33053 Latisana (IT)**

(74) Representative: **Petraz, Gilberto Luigi et al
GLP S.r.l.
Viale Europa Unita, 171
33100 Udine (IT)**

(56) References cited:
**WO-A1-2018/052586     US-A1- 2018 074 506**

• **VENGADESWARI R ET AL: "A survey on urban vegetation detection using airborne lidar data images", INFORMATION COMMUNICATION AND EMBEDDED SYSTEMS (ICICES), 2013 INTERNATIONAL CONFERENCE ON, IEEE, 21 February 2013 (2013-02-21), pages 937-942, XP032383797, DOI: 10.1109/ICICES.2013.6508178 ISBN: 978-1-4673-5786-9**
• **BRIGOT GUILLAUME ET AL: "Prediction of forest canopy structure from PolInSAR dataset", 2017 IEEE INTERNATIONAL GEOSCIENCE AND REMOTE SENSING SYMPOSIUM (IGARSS), IEEE, 23 July 2017 (2017-07-23), pages 4306-4309, XP033275420, DOI: 10.1109/IGARSS.2017.8127954**

**Description**

FIELD OF THE INVENTION

Embodiments described here concern an apparatus and a method to classify full waveform data, for example obtained by electromagnetic wave scanning instruments, and in this particular case LiDAR (Light Detection and Ranging) data, obtained by optical scanning of the earth's surface. In particular, possible applications of the embodiments described here concern the field of topographical surveys to map topographical surfaces, vegetation, urban areas, and infrastructures.

BACKGROUND OF THE INVENTION

Laser scanning is a remote sensing technique based on distance measurement, which is used to map topographical surfaces, vegetation, urban areas and infrastructures. This technique is often also called LiDAR (Light Detection and Ranging) because it uses a laser source to illuminate the earth's surface and a photodiode to record the retro-diffused radiation.

The measurement of the signal return time provides the measurement of the distance between the instrument and the reflecting object.

The calculated distance is then converted into three-dimensional coordinates of the point examined using GNSS (Global Navigation Satellite System) and IMU (Inertial Measurement Unit) measurement systems.

Every time the laser pulse is intercepted by an object, part of the energy is reflected toward the receiver and recorded. When the object is not solid, or is not too dense (for example, tree branches), part of the laser beam can continue its trajectory and can be reflected by lower obstacles, eventually also reaching the surface of the ground.

Thanks to this characteristic, laser scanning can be used to model the 3D structure of vegetation and to accurately detect the surface of the terrain even in the case of areas with a high density of tree coverage.

The first laser scanning instruments could record only a single return echo for each emitted signal, while newer instruments have allowed to record up to six echoes, or reflections, for each pulse emitted.

Furthermore, in recent years a new category of instruments has been made available on the market, called full waveform laser scanning devices, which are able to record the entire waveform of the reflected signal.

Numerous studies carried out in the last ten years have demonstrated the benefits which can be obtained by recording the entire retro-reflected waveform, and in particular the usefulness of the additional information that could be extracted from the signal waveform; information which, however, is not adequately exploited in known solutions.

In discrete return systems, which record one or more return echoes, generally the receiver detects a point of reference previously defined in the reflected pulse, and the time corresponding to this point is used to calculate the distance between the instrument and the target, while the remaining part of the waveform is lost.

In contrast, the distance corresponding to each individual echo for full waveform data can be calculated with greater control by the user, allowing greater accuracy in determining the three-dimensional position of the point.

Furthermore, it has been proven that, over forest areas, the number of echoes detected can be significantly higher for waveform recording instruments compared to multi-echo systems.

Recording the full waveform of the incoming pulse means obtaining more information about the geometric and physical characteristics of the target hit by the laser beam. In fact, the shape of the waveform received is correlated to the reflective properties of the surface.

This additional information could be exploited during the classification of the LiDAR data, but the current solutions fail to use it completely and efficiently.

One classification process consists in assigning each point to the specific class to which it belongs, as a function of the object to which the point belongs (for example terrain, vegetation, road, buildings).

Classification is one of the most important and time-consuming stages of the LiDAR data processing process and plays a key role in the generation of cartographic products.

Generally, it is necessary to classify the set, or point cloud detected, for example to create Digital Terrain Models (DTM), usually obtained from points belonging to the classes of terrain and roads, to carry out analysis on data belonging to specific classes (for example to assess vegetation density), and to automatically determine the relationship between different classes (for example calculate the distance between the conductors of the electricity lines and the vegetation, or buildings).

Publication "A Survey On Urban Vegetation Detection Using Airborne Data Images", R. Vengadeswari et S. Rajalakshmi, Information Communication and Embedded Systems (ICICES), 2013 International Conference IEEE, 2013-02-21 describes a fullwaveform airborne lidar for a fully automated classification of the urban scene.

In recent years, different classification methods have been proposed in literature, among which, for example, decision tree algorithms, Support Vector Machine (SVM) algorithms, and Markov Random Fields (MRF).

However, these algorithms fail to take advantage of the raw waveform data but are based on quantities extracted from the waveforms, such as for example amplitude, pulse width, number of echoes in each waveform, and retro-reflected energy.

Software programs commercially available and commonly used by companies to classify LiDAR data are also known, among which we can mention the TerraScan program (produced by TerraSolid), which contains algorithms able to extract data relating to terrain, buildings, vegetation, conductors and pylons on a geometric basis.

A further piece of information that can be exploited by this program is the intensity of the signal associated with each single point; however, the user is asked to specify the range of intensity values within which the points of a given class fall.

Although the program is very efficient from a computational point of view, the results obtained are often not very accurate and require intense manual work to correct classification errors.

There is therefore a need to perfect a classification apparatus and method in order to overcome at least one of the disadvantages of the state of the art.

In particular, one purpose of the present invention is to provide a classification apparatus that is able to perform an accurate classification of full waveform data signals, in particular to automatically classify topographical survey signals, without requiring interventions by an operator.

Another purpose of the invention is to provide an apparatus that is efficient both in terms of data processing time, and also in terms of correctness of the classification.

Another purpose of the invention is to perfect an automatic classification method for full waveform signals.

Another purpose of the present invention is to perfect a classification method that is able to process the full waveform signal in its raw form, without requiring preliminary steps of extracting specific characteristics from the signal itself.

Another purpose of the present invention is to perfect a classification method which is able to locate and classify with precision distinct adjacent points belonging to different classes.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

Embodiments described here concern a classification apparatus to classify full waveform data, for example signals retro-reflected by objects subjected to scanning by electromagnetic waves.

By "full waveform data" we mean signals comprising both information on the spatial coordinates (x, y, z) of the detected point, and also information on the distribution of the energy reflected by the surfaces affected by the pulse of electromagnetic waves over time, that is, the development over time of the waveform of the retro-reflected signal.

The apparatus according to the invention can be used to automatically classify full waveform data so as to assign a specific relative class to each detected point, according to the type of object affected by the source of electromagnetic waves to which the point belongs.

The electromagnetic waves can be in particular LiDAR (Light Detection and Ranging) signals relating to the earth's surface obtained by laser scanning instruments positioned on board a means of air transport, for example an airplane, a helicopter and suchlike.

According to variant embodiments, the electromagnetic waves can be radar signals.

According to some embodiments, the classification apparatus comprises a first neural network classification device, configured to receive at input and to process full waveform data, each corresponding to a signal retro-reflected by an object subjected to scanning by electromagnetic waves, and supply at output a vector of probabilities with a length equal to the number of classes considered, and containing the probability that the input datum analyzed belongs to a certain class among those considered.

Here and in the following description, with the expression "neural network" we mean a computing architecture in which a plurality of elementary processors are connected for the parallel processing of information, thus forming a network, whose structure derives from the structure of the human brain.

In particular, the first classification device is configured to analyze each input signal relating to a point detected independently of the adjacent points, considering only the waveform development.

According to some embodiments, the first classification device comprises a first neural network.

According to variant embodiments, the first neural network is a convolutional neural network (CNN), suitable to process data that have a grid topology.

In particular, the classification apparatus receives at input the full waveform signal in raw form, without the need to first extract one or more characteristics from it. The basic idea is to train a model that provides a compact and precise way to distinguish each waveform, recognizing in them characteristics and properties that are common to objects belonging to the same class.

The apparatus also comprises a second neural network data processing device, located and operatively connected downstream of the first classification device and configured to receive at input and to process both the same full waveform data signals that are received also by the first classification device, and also the vectors of probabilities supplied by the first classification device, and to supply at output the relative class of each point detected.

According to some embodiments, the second data processing device is configured to process the information on the probability distribution received from the first classification device, and to exploit the spatial coordinates of the points that correspond to the first retro-reflected signal recorded in each waveform and in particular the information regarding the height, so as to achieve a correct classification of the points detected, identifying regions of adjacent points that share similar properties.

In this way, both information relating to a single point independently of the adjacent points, and also information relating to the spatial positions and the geometric relationships between adjacent points detected, are taken into consideration.

The apparatus according to the invention can be advantageously used to automatically classify data signals obtained from topographical surveys, since it is able to locate and classify with extreme precision even points belonging to classes that describe objects having particularly small surfaces, such as, for example, the cables of a power line.

According to some embodiments, the second data processing device comprises a second neural network configured to perform image segmentation. By "image segmentation" we mean the process through which the pixels of an image are classified into regions that have common characteristics, so that each pixel in a given region has properties, or characteristics, similar to the other pixels of the same region.

According to some embodiments, the second neural network is a U-net neural network, configured to receive at input a two-dimensional image in which each pixel corresponds to a point identified by the spatial coordinates of the full waveform signal, and to supply at output the relative class of the signal, that is, of the object from which it was reflected. The two-dimensional image is constructed so as to memorize, for each pixel, the probability vector supplied by the first convolutional neural network, and the information on the height of the point which falls in the pixel itself.

Embodiments described here also concern a method to classify full waveform signals, in particular full waveform LiDAR data signals obtained by instruments on board an air transport means, for example an aircraft, a helicopter and suchlike.

The method according to the invention provides to perform a two-step procedure, with a first step of classification by means of a neural network which comprises the analysis of the waveform development of the full waveform data, independently of the full waveform data signals reflected by adjacent detection points, to provide an estimate of the probabilities that the signal analyzed belongs to a determinate class among those considered, and a second step which comprises the processing, by means of a neural network, of the data of the spatial geometric coordinates of the full waveform signal, and of the probability distribution which is obtained in the first step, in order to confirm or correct the estimate provided by the first step and obtain an automatic and accurate classification of the signal analyzed.

According to some embodiments, in the first step, the raw waveform data are given as input to a first classification device which supplies at output a vector with length n (where n is the number of classes) containing the probability that the input datum analyzed belongs to a certain class.

In the second step of the method according to the invention, the waveform data are mapped in a two-dimensional image, exploiting the coordinates of the points that correspond to the first return echo recorded for each waveform.

According to some embodiments, the resulting two-dimensional image will have multiple channels: each pixel of the image keeps in memory the probability distribution vector, supplied by the classification device used in the first step of the procedure, and the height of the datum that falls in the pixel considered.

Subsequently, the method provides to use a segmentation algorithm to divide the two-dimensional image, assigning a label to each pixel of the image so that the pixels with the same label share common properties.

Using two cascade neural networks it is therefore possible to exploit, completely and directly, all the information available from the full waveform signal.

In this way, it is possible to obtain a precise classification without the need for manual intervention by a user. Furthermore, the user is not required to define any type of value of the parameters that could influence the result of the classification, and, therefore, no prior knowledge is required of the characteristics of the data that have to be considered.

According to some embodiments, the method according to the invention comprises a training step , in which the first and/or the second neural network can be trained in order to learn to automatically extract the characteristics, or features, necessary to attribute the correct relative class to each point detected, from the information of the full waveform signals.

In this way, no preliminary step of an operator extracting the characteristics is necessary, as opposed to the methods of the state of the art which provide that it is the operator himself that extracts one or more characteristics to be used in the following processing from the full waveform signals.

According to some embodiments, the neural networks can be trained using the open source TensorFlow library, which makes optimized and extensively tested modules for machine learning available.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

BRIEF DESCRIPTION OF THE DRAWINGS

These and other characteristics of the present invention will become apparent from the following description of some embodiments, given as a non-restrictive example with reference to the attached drawings wherein:

- fig. 1 is a block diagram of a classification apparatus according to embodiments described here;
- fig. 2 is a schematic diagram of a network architecture of the apparatus of fig. 1 according to embodiments described here;
- fig. 3 is a schematic diagram of another network architecture of the apparatus of fig. 1 according to embodiments described here;
- fig. 4 shows an example of a confusion matrix obtained from the evaluation of a set of test data with a classification method according to the invention, in which each value corresponds to a normalized percentage value so that the sum of the values of each row is 100.

To facilitate comprehension, the same reference numbers have been used, where possible, to identify identical common elements in the drawings. It is understood that elements and characteristics of one embodiment can conveniently be incorporated into other embodiments without further clarifications.

DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

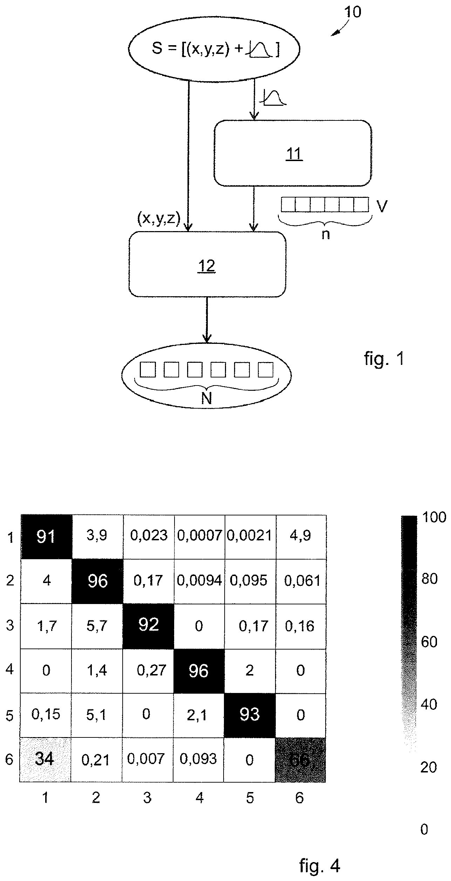

Embodiments described here concern a classification apparatus 10 (see fig. 1) to classify full waveform data, assigning each of them to a determinate relative class from a number N of predefined classes.

The data signals can be, for example, signals retro-reflected by detection points or objects subjected to scanning by pulses of electromagnetic waves.

According to some embodiments, the signals considered can be LiDAR (Light Detection and Ranging) signals relating to the earth's surface obtained by means of laser scanning instruments positioned on board a means of air transport, for example an airplane, a helicopter and suchlike.

According to other embodiments, the signals considered can also be return signals reflected by detection points or objects subjected to scanning by radar instruments.

According to some embodiments, the classification apparatus 10 can, in particular, be used in the field of topographical surveys to classify the data signals into a plurality N of predefined topographical classes.

By way of example only, N=6 classes can be considered, for example terrain, vegetation, buildings, conductors, pilons, roads.

It is understood that, as a function of the different needs, or applications, the number N of classes can be less than six, for example three, four, five, or greater than six, for example eight, ten, fifteen, or even more.

According to some embodiments, the classification apparatus 10 comprises a first neural network classification device 11 configured to receive at input full waveform data S, each corresponding to a signal retro-reflected by an object subjected to scanning by electromagnetic waves and supply at output a probability vector V of length n=N containing the probability that the 1 input signal analyzed belongs to a certain class among the N classes considered.

According to some embodiments, the probability vector V will contain for each of the N classes an indication of the probability that the point detected belongs to that class.

The apparatus further comprises a second neural network data processing device 12, configured to receive and process at input the full waveform data signals S retro-reflected by the objects subjected to scanning and the probability vectors V supplied by the first classification device 11 and supply at output the relative class of each point detected.

According to some embodiments, the second data processing device 12 is configured to process the information received from the first classification device 11, that is, the probability vector V, and the spatial coordinates of the points that correspond to the first echo of the retro-reflected signal recorded in each waveform and in particular the information relating to the height, so as to achieve a correct classification of the points.

According to some embodiments, the first classification device 11 is, or comprises, a first neural network, which can be implemented by means of a convolutional neural network (CNN), which is able to receive the full waveform signal in its raw form. It is therefore not necessary to first extract specific characteristics or parameters.

According to some embodiments, the first neural network comprises a multilayer architecture.

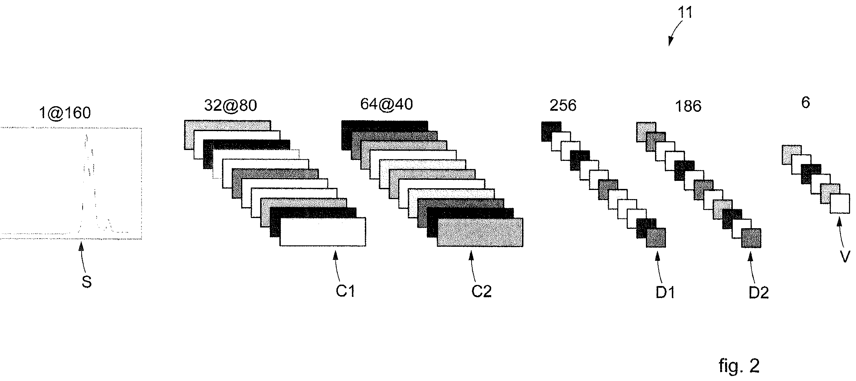

According to possible solutions, described for example with reference to fig. 2, the first classification device 11 has a four-layer, convolutional neural network architecture.

According to some embodiments, the first classification device 11 comprises at least two convolutional layers C1, C2 and two fully connected layers D1, D2.

The convolutional layers C1, C2 are layers obtained using the convolution operation with different matrices called filters, or kernels, on an input matrix. The filters contain a plurality of parameters that can be adjusted during the training of the neural network. By performing the convolution operation with f filters on the input, f activation maps (or feature maps) are obtained which become the input for the next layer.

The first convolutional layer C1 receives at input the full waveform data S in their raw form, and extracts from them significant characteristics for the type of classification to be performed, obtaining at output the activation maps in matrix form.

According to some embodiments, the convolutional layers C1, C2 can each have a size 1D with filter or kernel size equal to 3.

According to some embodiments, the convolutional layers C1, C2 have 32 and 64 filters respectively.

The size of a layer is defined as depth@width, where depth refers to the number of activation maps at output and width is the size of each output vector.

As the depth increases, the number of activation maps increases while their size decreases, so the layers closest to the input have fewer filters than the deeper layers. To keep more information regarding the input signal, the total number of activations (that is, the depth@width product) is substantially constant between one layer and the other.

According to possible solutions, one or both convolutional layers C1, C2 are followed by a layer that implements a ReLU (Rectified Linear Unit) activation function.

The layer that implements the ReLU function increases the non-linearity properties of the neural network without modifying the receptive fields of the convolutional layers C1, C2. The ReLU activation function, in particular, applies the activation function:

$$f(x) = \max(0, x).$$

According to variant embodiments, downstream of the ReLU activation function, a down sampling layer is provided, generally referred to as the pooling layer, configured to reduce the size of the problem, that is, the size of the activation map that is used as input to the next layer, and therefore the computational burden of the convolutional neural network CNN. In particular, the pooling layer divides the activation map into adjacent and non-overlapping regions and considers a value for each region.

According to possible solutions, the pooling layer is preferably a max-pooling layer with a core size of two, so that the activation map is divided into regions of size two and for each region only the maximum value is considered.

According to some embodiments, downstream of the convolutional layers C1, C2, the network architecture provides two fully connected layers D1, D2 to obtain the classification.

According to possible solutions, the first fully connected layer D1 has a number of neurons, that is, nodes, equal to 256.

According to some embodiments, the second fully connected layer D2 has a number of neurons, that is, nodes, equal to 186.

According to variant embodiments, both fully connected layers D1, D2 are followed by a ReLU activation function.

Downstream of one or of each ReLU activation function there may also be a regularization layer, known as a dropout layer, in which at each step of the training a certain number of neurons randomly chosen in the hidden layers is dropped out, preventing their output values from propagating to the next layers. According to possible construction solutions, the dropout layer can have a dropout rate of 0.5.

The dropout layer also allows to reduce, if not eliminate, possible overfitting problems, that is, over-adaptation, which can occur when the neural network learns to manage too correctly some information correlated to the training examples, thus limiting its ability to generalize. In this way, the first convolutional neural network maintains a high generalization capacity and manages to correctly identify and distinguish a variety of different waveforms.

According to further embodiments, downstream of the last fully connected layer D2 there is also an output layer with n neurons, wherein n corresponds to the number of classes considered.

A loss layer can also be provided downstream of the output layer, configured to evaluate the prediction error through the evaluation of a determinate loss function.

According to some embodiments, the loss layer uses as a loss function the categorical cross entropy with a softmax activation function, which transforms the values produced by the output layer into a probability distribution in the classes, generating the probability vector V which is then supplied at input to the second processing device 12.

According to some embodiments, the second data processing device 12 is, or comprises, a second neural network configured to receive at input the characteristics extracted from the first neural network of the first classification device 11, and the full waveform return signal S in order to achieve the desired classification. The second neural network is different from the first neural network.

The second neural network, in particular, considers the information on the height (coordinate z) of each point identified by the coordinates (x, y) to compare it with that of adjacent points, in order to identify regions with similar properties.

According to some embodiments, the second neural network receives at input a two-dimensional image in which the data of the full waveform signal S are mapped, in which each pixel corresponds to a detected point, identified by the spatial coordinates (x, y) of the points that correspond to the first echo recorded on each waveform signal S retro-reflected.

The resulting image has multiple channels: each pixel has stored inside it the distribution vector V of the probability, supplied by the first classification device 11, and the datum on the height of the point which falls within the pixel considered.

The second processing device 12 is configured to implement a segmentation algorithm to divide the two-dimensional image at input, and assign a label to each pixel in the two-dimensional image so that pixels with the same label share common properties.

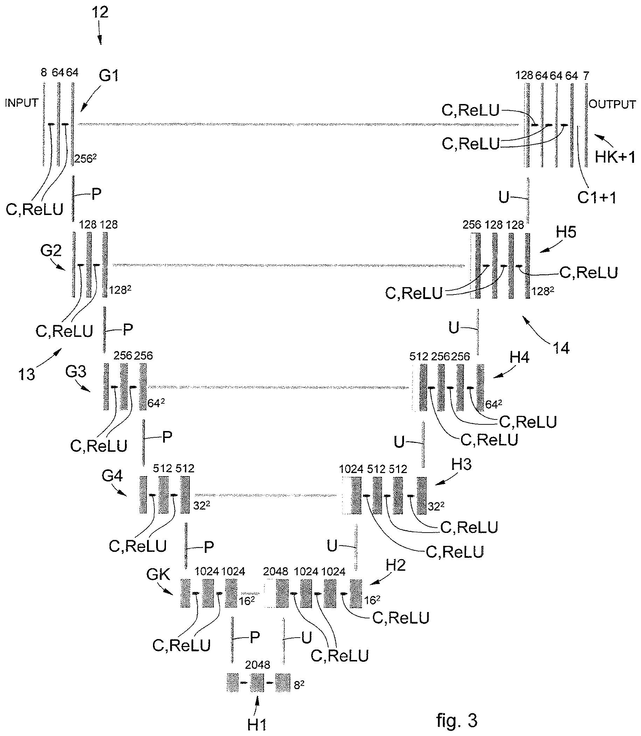

According to some embodiments, for example described with reference to fig. 3, the second neural network configured to implement the image segmentation algorithm is a neural network that follows a U-net model.

According to some embodiments, the U-net network comprises two paths, of which a contracting path 13, and an expansive path 14.

According to possible solutions, the contracting path 13 has an architecture similar to that of the first convolutional neural network.

According to some embodiments, the contracting path 13 comprises a succession of repeated convolutional groups G1, G2...GK. By way of example, fig. 3 shows a U-net with K = 5 convolutional groups G1, G2, G3, G4, G5.

Each convolutional group G1...GK comprises two convolutional layers C, each followed by a batch normalization layer, by a ReLU activation function, and by a max-pooling layer P for the down-sampling.

According to some embodiments, the two convolutional layers C can be 3x3 in size.

According to variant embodiments, the max-pooling layer P can be 2x2 in size and be configured to reduce the size of the representation by a factor equal to 2, which reduces the computational burden of the next layer.

In correspondence with each convolutional group, the number of activation channels is doubled.

According to some embodiments, the expansive path 14 comprises a plurality of successive up-sampling groups H1...HK, each configured to perform an up-sampling of the activation map that it receives at input from the previous layer. The up-sampling groups H1...HK are configured to increase the resolution of the output layer.

The expansive path is approximately symmetrical with respect to the contracting path, and this determines the characteristic "U" shape from which the name "U-net" derives.

For example, the number K of up-sampling groups H can be substantially equal to the number K of convolutional groups G, defining a symmetrical "U" shape.

Each up-sampling group HI ... HK comprises in particular an up-sampling layer U, configured to perform a function substantially opposite to that of a pooling layer P, halving the number of activation channels and increasing the size of the activation map.

The up-sampling U, according to some embodiments, can be obtained through an up-convolution operation 2x2 in size, correlated to the size of the pooling layer P of the contracting path 13.

Furthermore, three convolutional layers C are provided for each up-sampling group H1...HK, each followed by a batch normalization and a ReLU activation function.

According to some embodiments, the convolutional layers C are 3x3 in size, correlated to the size of the convolutional layers of the contracting path 13.

To maintain the localization, a concatenation between the characteristics of the up-sampled activation map and those of the corresponding activation map supplied by the contracting path 13 is provided upstream of the convolutional layers C. The convolutional layers C can therefore learn to construct an output value that is more spatially precise, on the basis of this additional information.

A convolution $1 \times 1$ in size is provided downstream of the last up-sampling group HK, to map each vector of characteristics in the desired number of classes. In the example shown in fig. 3, in correspondence with the output layer OUTPUT, the $1 \times 1$ convolution transforms a 64-component vector into a 7-component vector, that is, the N=6 classes considered, plus an additional class reserved for empty pixels, that is, those pixels in which no datum has been mapped.

According to some embodiments, the architecture of the U-net network of the example of fig. 3 comprises 28 convolutional layers.

Embodiments described here also concern a method to classify data signals, in particular full waveform LiDAR data signals obtained by electromagnetic wave scanning instruments on board an air transport means, for example an aircraft, a helicopter and suchlike.

The method according to the invention provides to perform a two-step procedure.

In the first step, the raw waveform data are supplied at input to a first classification device 11, obtaining at output a vector of length n=N (where N is the number of classes) containing the probability that the input datum analyzed belongs to a certain class.

In the second step of the method according to the invention, the data of the full waveform signal S are mapped in a two-dimensional image by exploiting the spatial coordinates (x, y) of the points that correspond to the first echo recorded for each waveform. In this way, the spatial positions and the geometric relationships between data coming from adjacent points are taken into account.

According to some embodiments, the resulting two-dimensional image has multiple channels, that is, each pixel, in addition to the spatial coordinates that identify the detected point, and the height of the point itself, will also contain the distribution vector V of the probability, supplied in the first step of the method.

Subsequently, the method provides to use a segmentation algorithm to divide the two-dimensional image and to assign a label to each pixel in the image, so that the pixels with the same label share common properties.

In this way, it is possible to obtain homogeneous regions in the two-dimensional image, with similar characteristics or properties.

According to some embodiments, in order to perform the first step the method provides to use a convolutional neural network 11 comprising convolutional layers C1, C2 and fully connected layers D1, D2, to identify in the waveforms of the signals considered common characteristics between the data belonging to the same class.

According to some embodiments, the method according to the invention provides to train the first convolutional neural network CNN of the first classification device 11 using as loss function the categorical cross entropy and an Adam optimizer with a learning rate equal to 0.001.

According to some embodiments, the method provides a batch size of 256.

According to some embodiments, to perform the second step, the method provides to use a U-net type neural network 12, with a first contracting path 13 and a second expansive path 14 substantially symmetrical to each other.

The method according to the invention provides, in particular, to exploit the neural networks for the classification of LiDAR data signals in the field of topographical surveys.

According to some embodiments, in the method according to the invention, the full waveform data are directly used in the classification process, without a preprocessing step, unlike the methods in the state of the art which require a preliminary extraction of the quantities, such as for example amplitude and width of the recorded pulse.

The method proposed by the present invention therefore allows to obtain a completely automatic classification, without any human intervention. Therefore, the user is not asked to define values of the parameters that can influence the result of the classification and, therefore, no prior knowledge of the data characteristics is required.

The performances that can be achieved are therefore clearly superior compared to the solutions of the state of the art, both in terms of accuracy and also of time required for the processing.

The method and the apparatus 10 described here have been tested experimentally by the Applicant on a set of data acquired by a full waveform laser scanning device on board a means of air transport, on an area that contains both natural surfaces, such as terrain and vegetation, and also artificial objects such as buildings and power lines. Six classes were considered:

1. terrain
2. vegetation
3. buildings
4. conductors
5 pylons
6. roads

The set of data was manually classified and subsequently divided into a set of training data, used to train the model, and a set of test data, used to evaluate the performance of the proposed method.

An accuracy of 93.06% was obtained, as can be seen from the correlated confusion matrix shown in fig. 4.

It is clear that modifications and/or additions of parts may be made to the classification apparatus 10 and method as described heretofore, without departing from the field and scope of the present invention.

It is also clear that, although the present invention has been described with reference to some specific examples, a person of skill in the art shall certainly be able to achieve many other equivalent forms of classification apparatus and method, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Classification apparatus to classify full waveform data (S) from signals retro-reflected from points of detection of objects subjected to scanning by electromagnetic waves, **characterized in that** said apparatus comprises:

- a first neural network classification device (11), configured to receive at input and to process said full waveform data (S) and supply at output a distribution vector of the probabilities (V) with a length (n) corresponding to a number (N) of classes considered, and containing the probability that the point of detection corresponding to the input datum analyzed belongs to a certain class among those considered; and
- a second neural network data processing device (12), located and operatively connected downstream of the first classification device (11) and configured to receive at input and to process both the same full waveform data (S) that are received also by the first classification device (11), and also the vectors of probabilities (V) supplied by the first classification device (11), and to supply at output the relative class of each object, from which said full waveform data signal (S) has been reflected.

2. Apparatus as in claim 1, **characterized in that** said first classification device (11) comprises a first neural network and said second data processing device (12) comprises a second neural network, different from said first neural network.

3. Apparatus as in claim 2, **characterized in that** said first neural network is a convolutional neural network comprising two convolutional layers (C1, C2) suitable to identify in the waveform of said full waveform data (S) recognition characteristics suitable to identify different relative classes and to generate specific activation maps, and two fully connected layers (D1, D2) configured to supply at output said distribution vector of the probabilities (V) on the basis of said activation maps.

4. Apparatus as in any claim hereinbefore, **characterized in that** said second neural network is a neural network of the U-net type configured to perform a segmentation process of images and comprising a contracting path (13) and an expansive path (14).

5. Apparatus as in claim 4, **characterized in that** said contracting path (13) comprises a succession of repeated convolutive groups (G1, G2 ... GK), wherein each convolutive group (G1...GK) comprises two convolutional layers (C), each followed by a batch normalization layer, by a rectified linear unit (ReLU) activation function and by a max-pooling layer (P) configured to perform a down sampling of said activation maps in order to reduce the overall computational burden.

6. Apparatus as in claim 4 or 5, **characterized in that** said expansive path (14) comprises a succession of up-sampling groups (H1 ...HK), configured to perform an up-sampling of the activation map that it receives at input from the preceding layer and to increase the resolution of the output layer, wherein each up-sampling group (H1...HK) comprises at least one up-sampling layer (U) and a concatenation with the corresponding convolutive group (G1...GK) of the contracting path (13).

7. Apparatus as in claim 6, **characterized in that** said up-sampling groups (H1...HK) each comprise three convolutional layers (C) each followed by a batch normalization and by a rectified linear unit (ReLU) activation function, wherein the size of the convolutional layers (C) is correlated to the size of the convolutional layers (C) of the convolutive groups (G1...GK) of said contracting path (13).

8. Method to classify full waveform data signals (S) retro-reflected from points of detection of objects subjected to scanning by electromagnetic waves, **characterized in that** it provides to perform a two-step procedure, wherein a first classification step by neural network comprises the reception of said full waveform data (S) and the analysis of the development of the waveform of said full waveform data (S) independently from the full waveform data signals (S) reflected from adjacent points of detection, in order to supply a distribution vector (V) of the probability that the point of detection, corresponding to the input data analyzed, belongs to a certain class between a number (N) of classes considered, and a second step that comprises the processing, by neural network, of the same full waveform data (S) that are also processed in the first step, and also of the distribution of probabilities obtained in the first step, wherein in the second step the data of the geometric spatial coordinates deriving from the full waveform data (S) signal and the geometric and spatial relations between adjacent points of detection are exploited, in order to supply the relative class of each object from which said full waveform data signal (S) has been reflected.

9. Classification method as in claim 8, **characterized in that,** in order to perform the first step, the method provides to implement a first convolutional neural network, supplying at input the full waveform data (S) in rough form and, to perform the second step, the method provides to implement a second neural network of the U-net type, provided with a contracting path (13) and an expansive path (14), supplying at input a two-dimensional image in which each pixel corresponds to a detected point identified from the spatial coordinates of the full waveform data signal (S), wherein each pixel of the two-dimensional image comprises the probability vector (V) supplied by the first neural convolutional network and the information on the height of the datum that falls in the pixel itself.

10. Classification method as in claim 8 or 9, **characterized in that** it provides to analyze full waveform data (S) of topographical detection data by means of laser (LiDAR) corresponding to the scan of the earth's surface obtained using scanning instruments located on board an air transport mean and to classify the full waveform data (S) analyzed, identifying a respective class from either ground, vegetation, buildings, conductors, pylons, streets to which the data belongs.

**Patentansprüche**

1. Klassifizierungsvorrichtung zum Klassifizieren von Gesamtwellenformdaten (S) aus Signalen, welche von Erfassungspunkten von Objekten, die einer Abtastung durch elektromagnetische Wellen unterzogen werden, zurückreflektiert werden, **dadurch gekennzeichnet, dass** die Vorrichtung aufweist:

   - eine erste Neuronales-Netz-Klassifizierungsvorrichtung (11), welche dazu eingerichtet ist, die Gesamtwellenformdaten (S) am Eingang zu empfangen und zu verarbeiten und am Ausgang einen Verteilungsvektor der Wahrscheinlichkeiten (V) zu liefern, welcher eine Länge (n), welche einer Anzahl (N) von betrachteten Klassen entspricht, aufweist und welcher die Wahrscheinlichkeit enthält, dass der Erfassungspunkt, welcher zu dem analysierten Eingangsdatum gehört, zu einer bestimmten Klasse unter den betrachteten gehört, und
   - eine zweite Neuronales-Netz-Datenverarbeitungsvorrichtung (12), welche der ersten Klassifizierungsvorrichtung (11) nachgelagert angeordnet ist und mit dieser wirkverbunden ist und dazu eingerichtet ist, sowohl die gleichen Gesamtwellenformdaten (S), welche auch durch die erste Klassifizierungsvorrichtung (11) empfangen werden, als auch die durch die erste Klassifizierungsvorrichtung (11) gelieferten Wahrscheinlichkeitsvektoren (V) am Eingang zu empfangen und zu verarbeiten und am Ausgang die jeweilige Klasse jedes Objekts, von dem das Gesamtwellenformdatensignal (S) reflektiert wurde, zu liefern.

2. Vorrichtung nach Anspruch 1, **dadurch gekennzeichnet, dass** die erste Klassifizierungsvorrichtung (11) ein erstes neuronales Netz aufweist und die zweite Datenverarbeitungsvorrichtung (12) ein zweites neuronales Netz aufweist, welches sich von dem ersten neuronalen Netz unterscheidet.

3. Vorrichtung nach Anspruch 2, **dadurch gekennzeichnet, dass** das erste neuronale Netz ein faltendes neuronales Netz ist, welches zwei Faltungsschichten (C1, C2), die dazu geeignet sind, in der Wellenform der Gesamtwellenformdaten (S) Erkennungsmerkmale, die dazu geeignet sind, verschiedene jeweilige Klassen zu identifizieren, zu identifizieren und spezifische Aktivierungskarten zu erzeugen, und zwei vollständig verbundene Schichten (D1, D2), welche dazu eingerichtet sind, am Ausgang den Verteilungsvektor der Wahrscheinlichkeiten (V) auf Grundlage der Aktivierungskarten zu liefern, aufweist

4. Vorrichtung nach einem der vorhergehenden Ansprüche, **dadurch gekennzeichnet, dass** das zweite neuronale Netz ein neuronales Netz vom U-Netz-Typ ist, welches dazu eingerichtet ist, einen Segmentierungsprozess von Bildern durchzuführen, und einen Kontraktionspfad (13) und einen Expansionspfad (14) aufweist.

5. Vorrichtung nach Anspruch 4, **dadurch gekennzeichnet, dass** der Kontraktionspfad (13) eine Folge von wiederholten Faltungsgruppen (G1, G2 ... GK) aufweist, wobei jede Faltungsgruppe (G1 ... GK) zwei Faltungsschichten (C) aufweist, jede gefolgt von einer Batch-Normalisierungsschicht, von einer Aktivierungsfunktion mit gleichgerichteter linearer Einheit (ReLU) und von einer Max-Pooling-Schicht (P), welche dazu eingerichtet ist, ein Abwärtsabtastung der Aktivierungskarten durchzuführen, um den Gesamtrechenaufwand zu verringern.

6. Vorrichtung nach Anspruch 4 oder 5, **dadurch gekennzeichnet, dass** der Expansionspfad (14) eine Folge von Aufwärtsabtastungsgruppen (H1 ... HK) aufweist, welche dazu eingerichtet sind, eine Aufwärtsabtastung der Aktivierungskarte, welche von der vorhergehenden Schicht am Eingang empfangen wird, durchzuführen und die Auflösung der Ausgangsschicht zu erhöhen, wobei jede Aufwärtsabtastungsgruppe (H1 ... HK) mindestens eine Aufwärtsabtastungsschicht (U) und eine Verkettung mit der entsprechenden Faltungsgruppe (G1 ... GK) des Kontraktionspfads (13) aufweist.

7. Vorrichtung nach Anspruch 6, **dadurch gekennzeichnet, dass** die Aufwärtsabtastgruppen (H1...HK) jeweils drei Faltungsschichten (C) aufweisen, jede gefolgt von einer Batch-Normalisierung und von einer Aktivierungsfunktion mit gleichgerichteter linearer Einheit (ReLU), wobei die Größe der Faltungsschichten (C) mit der Größe der Faltungsschichten (C) der Faltungsgruppen (G1 ... GK) des Kontraktionspfades (13) korreliert ist.

8. Verfahren zur Klassifizierung von Gesamtwellenformdatensignalen (S), welche von Erfassungspunkten von Objekten, die einer Abtastung durch elektromagnetische Wellen unterzogen werden, zurückreflektiert werden, **dadurch gekennzeichnet, dass** es vorsieht die Durchführung einer zweistufigen Prozedur, wobei ein erster Klassifizierungsschritt durch ein neuronales Netz den Empfang der Gesamtwellenformdaten (S) und die Analyse der Entwicklung der Wellenform der Gesamtwellenformdaten (S) unabhängig von den Gesamtwellenformdatensignalen (S), welche von benachbarten Erfassungspunkten reflektiert werden, , um einen Verteilungsvektor (V) der Wahrscheinlichkeit, dass der Erfassungspunkt, der den analysierten Eingangsdaten entspricht, zu einer bestimmten Klasse unter einer Anzahl (N) von betrachteten Klassen gehört, zu liefern, aufweist, und eines zweiten Schritts, welcher die Verarbeitung, durch ein neuronales Netz, derselben Gesamtwellenformdaten (S), welche auch im ersten Schritt verarbeitet werden, und auch der im ersten Schritt erhaltenen Wahrscheinlichkeitsverteilung aufweist, wobei im zweiten Schritt die Daten der geometrischen Raumkoordinaten, welche aus dem Gesamtwellenformdatensignal (S) abgeleitet werden, und die geometrischen und räumlichen Beziehungen zwischen benachbarten Erfassungspunkten ausgewertet werden, um die jeweilige Klasse jedes Objekts, von dem aus das Gesamtwellenformdatensignal (S) reflektiert worden ist, zu liefern.

9. Klassifizierungsverfahren nach Anspruch 8, **dadurch gekennzeichnet, dass,** zur Durchführung des ersten Schritts, das Verfahren die Implementierung eines ersten faltenden neuronalen Netzes vorsieht, wobei am Eingang die Gesamtwellenformdaten (S) in Rohform zugeführt werden, und dass, zur Durchführung des zweiten Schritts, das Verfahren die Implementierung eines zweiten neuronalen Netzes vom U-Netz-Typ vorsieht, welches mit einem Kontraktionspfad (13) und einem Expansionspfad (14) versehen ist, wobei am Eingang ein zweidimensionales Bild zugeführt wird, in welchem jedes Pixel einem erfassten Punkt, der anhand der räumlichen Koordinaten des vollständigen Wellenformdatensignals (S) identifiziert wurde, entspricht, wobei jedes Pixel des zweidimensionalen Bildes den Wahrscheinlichkeitsvektor (V), welcher von dem ersten faltenden neuronalen Netz geliefert wird, und die Information über die Höhe des Datums, das in das Pixel selbst fällt, enthält.

10. Klassifizierungsverfahren nach Anspruch 8 oder 9, **dadurch gekennzeichnet, dass** es vorsieht, Gesamtwellenformdaten (S) von topographischen Erfassungsdaten mittels Laser (LiDAR), welche der Abtastung der Erdoberfläche, die unter Verwendung von Abtastinstrumenten, die sich an Bord eines Lufttransportmittels befinden, erhalten wird, entsprechen, zu analysieren und die analysierten Gesamtwellenformdaten (S) zu klassifizieren, wobei eine jeweilige Klasse aus entweder Boden, Vegetation, Gebäuden, Leitungen, Masten, Straßen, zu denen die Daten gehören, identifiziert wird.

**Revendications**

1. Appareil de classification pour classer des données de forme d'onde complète (S) à partir de signaux rétroréfléchis par des points de détection d'objets soumis à un balayage par ondes électromagnétiques, **caractérisé en ce que** ledit appareil comprend :

   - un premier dispositif de classification à réseau neuronal (11), configuré pour recevoir au niveau d'une entrée et traiter lesdites données de forme d'onde complète (S) et délivrer au niveau d'une sortie un vecteur de distribution des probabilités (V) avec une longueur (n) correspondant à un nombre (N) de classes considérées, et contenant la probabilité que le point de détection correspondant à la donnée d'entrée analysée appartienne à une certaine classe parmi celles considérées ; et
   - un second dispositif de traitement des données à réseau neuronal (12), situé et connecté opérationnellement en aval du premier dispositif de classification (11) et configuré pour recevoir au niveau d'une entrée et traiter à la fois les mêmes données de forme d'onde complète (S) qui sont reçues également par le premier dispositif de classification (11), et aussi les vecteurs de probabilités (V) délivrés par le premier dispositif de classification (11), et pour délivrer au niveau d'une sortie la classe relative de chaque objet, à partir duquel ledit signal de données de forme d'onde complète (S) a été réfléchi.

2. Appareil selon la revendication 1, **caractérisé en ce que** ledit premier dispositif de classification (11) comprend un premier réseau neuronal et ledit second dispositif de traitement de données (12) comprend un second réseau neuronal, différent dudit premier réseau neuronal.

3. Appareil selon la revendication 2, **caractérisé en ce que** ledit premier réseau neuronal est un réseau neuronal convolutif comprenant deux couches convolutives (C1, C2) capables d'identifier dans la forme d'onde desdites données de forme d'onde complète (S) des caractéristiques de reconnaissance capables d'identifier différentes classes relatives et de générer des cartes d'activation spécifiques, et deux couches entièrement connectées (D1, D2) configurées pour délivrer au niveau d'une sortie ledit vecteur de distribution des probabilités (V) sur la base desdites cartes d'activation.

4. Appareil selon l'une quelconque des revendications précédentes, **caractérisé en ce que** ledit second réseau neuronal est un réseau neuronal du type U-net configuré pour effectuer un processus de segmentation d'images et comprenant un chemin de contraction (13) et un chemin expansif (14).

5. Appareil selon la revendication 4, **caractérisé en ce que** ledit chemin de contraction (13) comprend une succession de groupes convolutifs répétés (G1, G2 ... GK), dans lequel chaque groupe convolutif (G1 ... GK) comprend deux couches convolutives (C), chacune suivie d'une couche de normalisation par lots, d'une fonction d'activation d'unité linéaire rectifiée (ReLU) et d'une couche max-pooling (P) configurée pour effectuer un sous-échantillonnage desdites cartes d'activation afin de réduire la charge de calcul globale.

6. Appareil selon la revendication 4 ou 5, **caractérisé en ce que** ledit chemin expansif (14) comprend une succession de groupes de sur-échantillonnage (H1 ... HK), configuré pour effectuer un sur-échantillonnage de la carte d'activation qu'il reçoit au niveau d'une entrée en provenance de la couche précédente et pour augmenter la résolution de la couche de sortie, dans lequel chaque groupe de sur-échantillonnage (H1 ... HK) comprend au moins une couche de sur-échantillonnage (U) et une concaténation avec le groupe convolutif correspondant (G1 ... GK) du chemin de contraction (13).

7. Appareil selon la revendication 6, **caractérisé en ce que** lesdits groupes de sur-échantillonnage (H1... HK) comprennent chacun trois couches convolutives (C) chacune suivie d'une normalisation par lots et d'une fonction d'activation d'unité linéaire rectifiée (ReLU), dans lequel la taille des couches convolutives (C) est corrélée à la taille des couches convolutives (C) des groupes convolutifs (G1 ... GK) dudit chemin de contraction (13).

8. Procédé de classification de signaux de données de forme d'onde complète (S) rétroréfléchis par des points de détection d'objets soumis à un balayage par ondes électromagnétiques, **caractérisé en ce qu'**il prévoit d'effectuer une procédure en deux étapes, dans lequel une première étape de classification par réseau neuronal comprend la réception desdites données de forme d'onde complète (S) et l'analyse du développement de la forme d'onde desdites données de forme d'onde complète (S) indépendamment des signaux de données de forme d'onde complète (S) réfléchis par des points de détection adjacents, afin de délivrer un vecteur de distribution (V) de la probabilité que le point de détection, correspondant aux données d'entrée analysées, appartienne à une certaine classe entre un nombre (N) de classes considérées, et une seconde étape qui comprend le traitement, par réseau neuronal, des mêmes données de forme d'onde complète (S) qui sont également traitées lors de la première étape, et aussi de la distribution de probabilités obtenues lors de la première étape, dans lequel, dans la seconde étape, les données des coordonnées spatiales géométriques dérivées du signal de données de forme d'onde complète (S) et les relations géométriques et spatiales entre des points de détection adjacents sont exploitées, afin de délivrer la classe relative de chaque objet à partir duquel ledit signal de données de forme d'onde complète (S) a été réfléchi.

9. Procédé de classification selon la revendication 8, **caractérisé en ce que**, pour effectuer la première étape, le procédé prévoit de mettre en œuvre un premier réseau neuronal convolutif, délivrant au niveau d'une entrée les données de forme d'onde complète (S) sous forme approximative et, d'effectuer la seconde étape, le procédé prévoit de mettre en œuvre un second réseau neuronal du type U-net, muni d'un chemin de contraction (13) et d'un chemin expansif (14), délivrant au niveau d'une entrée une image bidimensionnelle dans laquelle chaque pixel correspond à un point détecté identifié à partir des coordonnées spatiales du signal de données de forme d'onde complète (S), dans lequel chaque pixel de l'image bidimensionnelle comprend le vecteur de probabilité (V) délivré par le premier réseau convolutif neuronal et les informations sur la hauteur de la donnée qui tombe dans le pixel luimême.

10. Procédé de classification selon la revendication 8 ou 9, **caractérisé en ce qu'**il prévoit d'analyser des données de forme d'onde complète (S) de données de détection topographique au moyen d'un laser (LiDAR) correspondant au balayage de la surface de la Terre obtenu en utilisant des instruments de balayage situés à bord d'un moyen de transport aérien et de classer les données de forme d'onde complète (S) analysées, en identifiant une classe respective parmi le sol, de la végétation, des bâtiments, des conducteurs, des pylônes, des rues à laquelle appartiennent les données.

fig. 1

| | 1 | 2 | 3 | 4 | 5 | 6 |
|---|---|---|---|---|---|---|
| 1 | 91 | 3,9 | 0,023 | 0,0007 | 0,0021 | 4,9 |
| 2 | 4 | 96 | 0,17 | 0,0094 | 0,095 | 0,061 |
| 3 | 1,7 | 5,7 | 92 | 0 | 0,17 | 0,16 |
| 4 | 0 | 1,4 | 0,27 | 96 | 2 | 0 |
| 5 | 0,15 | 5,1 | 0 | 2,1 | 93 | 0 |
| 6 | 34 | 0,21 | 0,007 | 0,093 | 0 | 66 |

fig. 4

fig. 2

fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. VENGADESWARI ; S. RAJALAKSHMI.** A Survey On Urban Vegetation Detection Using Airborne Data Images. *Information Communication and Embedded Systems (ICICES), 2013 International Conference IEEE,* 21 February 2013